# EUROPÄISCHE PATENTSCHRIFT

(11) **EP 0 984 852 B1**
(45) Veröffentlichungstag und Bekanntmachung des Hinweises auf die Patenterteilung: **05.03.2003**
(21) Anmeldenummer: 98930731.9
(22) Anmeldetag: 26.05.1998
(51) Int. Cl.: B29C 33/44, B29D 30/06

(54) **FORM ZUM FORMEN EINES RINGFÖRMIGEN KÖRPERS, INSBESONDERE FAHRZEUGREIFEN**
MOLD TO SHAPE A RING-SHAPED BODY, SPECIALLY VEHICLE TIRES
MOULE POUR FA ONNER UN CORPS ANNULAIRE, NOTAMMENT DES PNEUS DE VEHICULE

(30) Priorität: 27.05.1997 DE 19722199
(43) Veröffentlichungstag der Anmeldung: 15.03.2000
(73) Patentinhaber: Continental Aktiengesellschaft, 30001 Hannover (DE)
(72) Erfinder: WENZEL, Karsten, D-31542 Bad Nenndorf (DE); JANOTTA, Gerhard, S-33230 Gislaved (SE); GEFFERT, Ulrich, D-30163 Hannover (DE)
(86) Internationale Anmeldenummer: EP9803096
(87) Internationale Veröffentlichungsnummer: WO98053972

(56) Entgegenhaltungen:
- EP-A- 0 320 494
- FR-A- 2 306 070
- US-A- 3 852 006

## Beschreibung

Die Erfindung betrifft eine Form zum Formen eines im wesentlichen ringförmigen Körpers, mit einer Vielzahl von äußeren, radial verfahrbaren Formsegmenten, die von einer sie umgebenden ringförmigen Struktur mit einer den Formsegmenten zugewandten Gleitfläche zusammengehalten werden, wobei mit je einem Formsegment verbundene Hakenelemente in je eine hinterschnittene, in die konische Gleitfläche eingelassene Nut eingreifen, so daß bei axialem Verfahren des Ringes eine radiale Bewegung der Formsegmente bewirkt wird, wobei je zumindest eine Anlagefläche an einer Nutwandfläche zur Anlage kommt.

Solche Formen werden insbesondere in der Reifenindustrie fachsprachlich auch als Container bezeichnet. Dabei sind Ausführungsformen mit festem inneren Kern bekannt, sowie Ausführungsformen, bei denen ein aufblasbarer toroidaler Gummischlauch während des Vulkanisationsprozesses von innen her den Reifenrohling gegen die Vulkanisationsform drückt.

Durch Verfahren des die Formsegmente gegen den Innendruck zusammenhaltenden Ringes in axialer Richtung werden die Formsegmente radial nach außen verfahren und so die Form nach Abschluß des Formprozesses bzw. in der Reifenindustrie des Vulkanisationsvorganges, während dessen das Reifenprofil geschaffen wird, geöffnet.

Die Ausformung des geheizten Reifens folgt bei den bekannten Vorrichtungen durch gleichzeitiges radiales Herausziehen aller Profilsegmente (Formsegmente) in einem Schritt, da sich bei axialem Verfahren des Halteringes alle Profilsegmente gleichmäßig nach außen bewegen.

Stark lamellierte Winterreifen und klebrige Laufstreifenmischungen (Silica) führen wegen der starken Haftkräfte in den Formsegmenten zu Problemen beim Ausformen der Reifen. Da sich der Reifen nicht auf allen Formsegmenten gleichmäßig löst, kommt es zu einer Beanspruchung des geheizten Reifens auf Zug, was den Reifen bleibend verformen kann, so daß seine Laufeigenschaften verschlechtert werden.

Zur Lösung der Aufgabe, die auf den Reifen ausgeübten Kräfte beim Öffnen der Form zu verringern, ist es aus der EP 0 479 079 B1 bekannt, die Form sequentiell zu öffnen. Dabei wird zunächst in einem ersten Schritt eine bestimmte Anzahl von Formsegmenten radial nach außen verfahren, und erst in einem zweiten Schritt die verbleibenden Formsegmente bis zum vollständigen Öffnen der Form verfahren. Bei der aus dem Stand der Technik in Form der EP 0 479 079 B1 bekannten Vorrichtung ist eine aufwendige Hydraulik und Steuerung vorgesehen, wobei jedem Formsegment ein eigener Hydraulikzylinder zugeordnet ist. Die bekannte Vorrichtung zum sequentiellen Öffnen ist daher durch einen hohen Bauaufwand gekennzeichnet. Weiterhin ist nachteilig, daß die gattungsgemäßen, eingangs beschriebenen Formen nicht weiter verwendet werden können, so daß insbesondere in der Reifenindustrie beim Übergang zu sequentiellen Ausformverfahren ein erheblicher Investitionsbedarf entstünde, da die existierenden Formen abgeschrieben werden müßten.

Der Erfindung liegt daher die Aufgabe zugrunde, existierende gattungsgemäße Formen so weiter zu entwickeln, daß ein sequentielles Ausformen bzw. Öffnen der Form ermöglicht wird.

Die Lösung der Aufgabe ist bei einer gattungsgemäßen Vorrichtung dadurch gegeben, daß der Querschnitt einiger Hakenelemente so bemessen ist, daß die Anlagefläche später an der jeweiligen zugeordneten Nutwandfläche zur Anlage kommt, als die Anlageflächen anderer Hakenelemente. Alternativ kann vorgesehen sein, daß der Querschnitt der zugeordneten Nuten einiger Hakenelemente so bemessen ist, daß der gleiche Effekt erzielt wird, d.h. daß Anlagefläche später an der jeweiligen zugeordneten Nutwandfläche zur Anlage kommt, als die Anlagefläche anderer Hakenelemente. Die Lösung besteht weiter in einem Verfahren gemäß Anspruch 5.

Weitere bevorzugte Ausführungsformen der Erfindung sind in den Unteransprüchen beschrieben.

Die Erfindung wird im folgenden anhand eines in der Zeichnung dargestellten Ausführungsbeispieles näher erläutert. In der Zeichnung zeigen:
- Figur 1 -: einen hälftigen Radialschnitt durch eine erfindungsgemäße Vorrichtung,
- Figur 2 -: eine Draufsicht auf eine Vorrichtung gemäß Figur 1,
- Figur 3 -: eine Draufsicht gemäß Figur 2 einer alternativen Ausführungsform,
- Figur 4 -: einen Schnitt längs der Linie IV-IV in Figur 1,
- Figur 5 -: eine Ansicht gemäß Figur 4 mit einem modifizierten Hakenelement,
- Figur 6 -: einen Schnitt analog gemäß Figur 4,
- Figur 7 -: eine alternative Ausführungsform einer Modifikation analog zu Figur 5,
- Figur 8 -: einen weiteren Schnitt analog zu Figur 4 der zweiten Alternative,
- Figur 9 -: eine Modifikation der Alternative gemäß Figur 8 in einem Schnitt gemäß Figur 5,
- Figur 10 -: eine Draufsicht auf ein Hakenelement,
- Figur 11 -: eine Ansicht des Hakenelementes gemäß Figur 10,
- Figur 12 -: eine Stirnansicht des Hakenelementes gemäß Figur 10,
- Figur 13 -: eine Ansicht eines alternativen Hakenelementes gemäß Figur 10, und
- Figur 14 -: die zugehörige Stirnansicht.

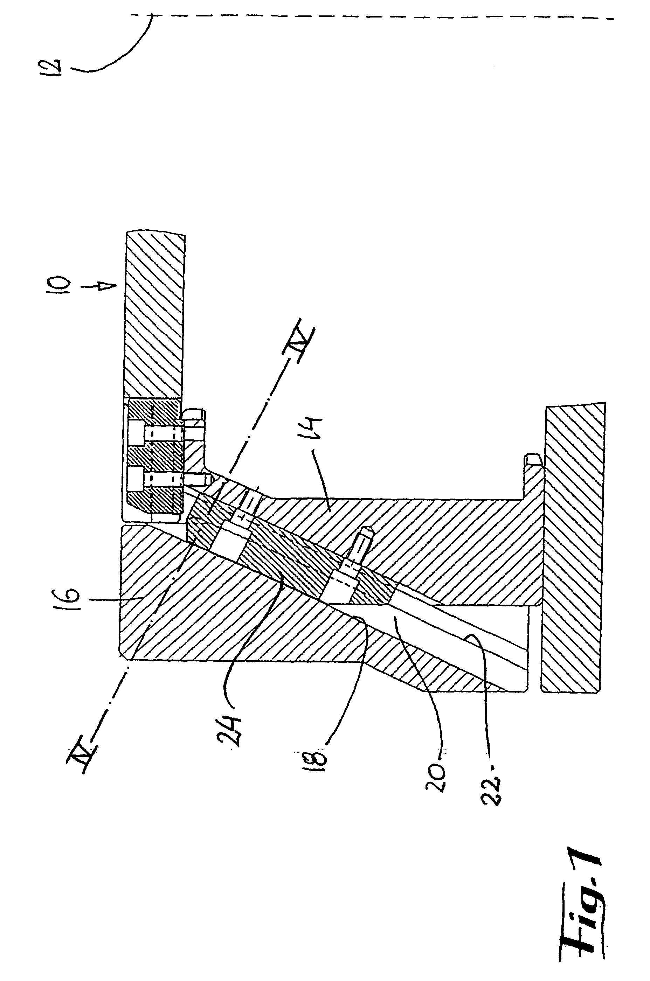

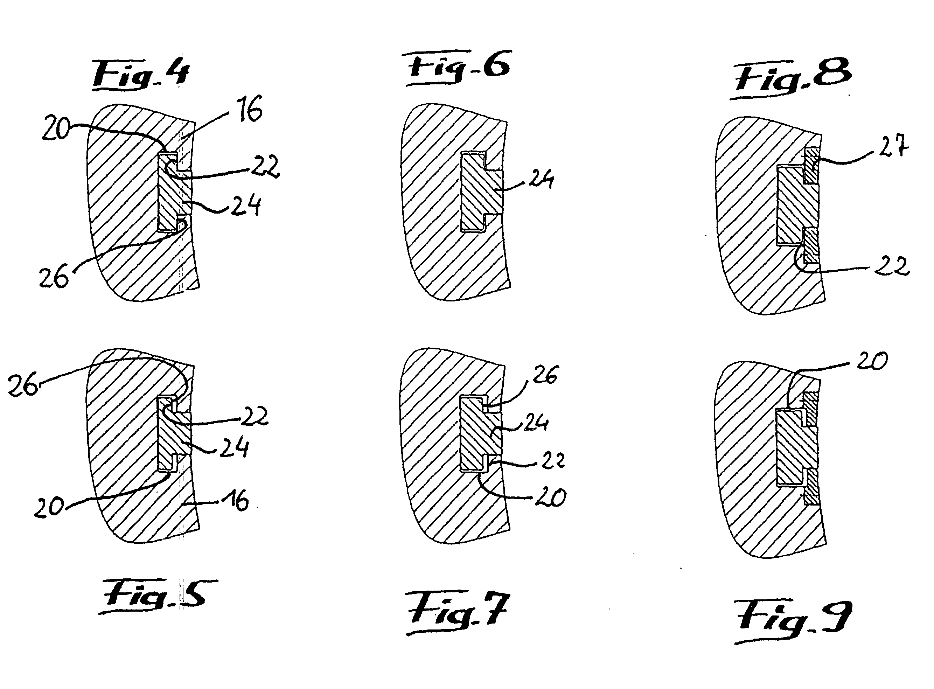

Figur 1 zeigt eine Reifenform 10, die zu einer Mittelachse 12 rotationssymmetrisch aufgebaut ist. Mehrere radial verteilte Halter 14 werden durch einen Außenring 16 zusammengehalten. Der Außenring 16 weist eine konische Innenfläche 18 auf, in die umfangsmäßig verteilt für jeden Halter 14 eine Nut 20 eingearbeitet sind. Die Nut 20 weist, wie Figur 4 zeigt, eine T-förmigen Querschnitt auf. Die T-förmigen Querschnitte bilden eine hinterschnittene Nut. Im Bereich der Hinterschnitte sind Nutwandflächen 22 ausgebildet. In jeder T-förmigen Nut 20 gleitet ein Hakenelement 24, das mittels zweier nicht dargestellter Schrauben mit dem jeweiligen Halter 14 verbunden ist. Jedes Hakenelement 24 weist zwei Anlageflächen 26 auf.

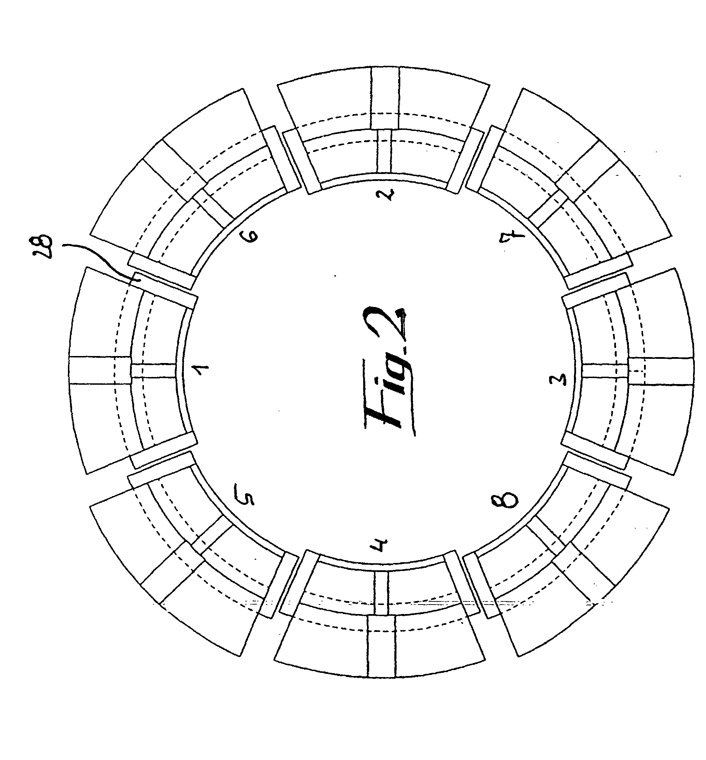

Figur 2 zeigt eine vollständige Draufsicht der Vorrichtung gemäß Figur 1, wobei zusätzlich in die Halter 14 eingesetzte Formsegmente 28 gezeichnet sind.

In Figur 2 ist zu erkennen, daß insgesamt acht Formsegmente und der zugehörige Halter die Form bilden. Im Sinne des Hauptanspruches sind jeweils ein Halter 14 und ein eigentliches Formsegment 28 gemeinsam als Formsegment aufzufassen. Die acht Formsegmente sind mit Bezugszeichen 1 bis 8 gekennzeichnet.

In Figur 2 ist eine Ausführungsform gezeichnet, bei der die Formsegmente durch einen sie umgebenden Ring mit einer konischen Gleichfläche 18 zusammengehalten werden.

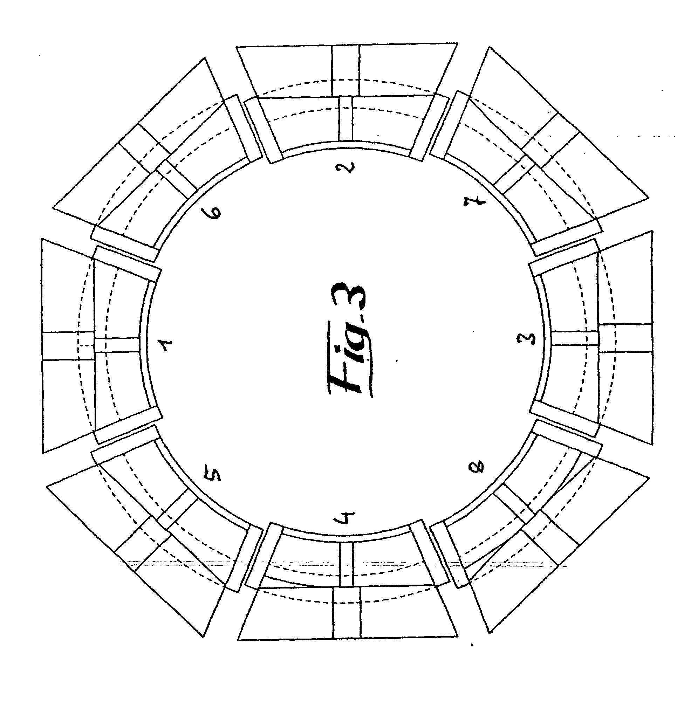

Figur 3 zeigt eine alternative Ausführungsform, bei der eine ringförmige Struktur in Form eines Oktogons die notwendigen Gleitflächen bildet und die Formsegmente führt.

Wird - wie Figur 1 zeigt - der Außenring 16 in axialer Richtung - d.h. parallel zur Mittelachse 12 - verschoben, - in Figur 1 nach oben -, so kommen die Anlageflächen 26 der Hakenelemente 24 an den Nutwandflächen 22 zur Anlage. Jedes Hakenelement 24 rutscht wegen des Anstellwinkels, bei dem Ausführungsbeispiel gemäß Figur 2 gebildet durch die konische Innenfläche 18 - auf einer schiefen Ebene, wodurch die Formsegmente 14/28 nach außen zum Öffnen der Form gezogen werden.

Um ein sequentielles Öffnen zu ermöglichen, ist - wie ein Vergleich der Figuren 4 und 5 zeigt - die Dicke der T-förmigen Querschnitte mancher Hakenelemente 24 (in Figur 2 der den Formsegmenten 1, 2, 3 und 4 zugeordneten Hakenelemente) im Bereich des Querhauptes des "T's" in einer Richtung senkrecht zu den Anlageflächen 26 verringert. Aus diesem Grunde kommen die Anlageflächen 26 der entsprechend modifizierten Hakenelemente 24 erst an den zugeordneten Nutwandflächen 22 zur Anlage, wenn ein Teil des axialen Hubes des Außenringes 16 zurückgelegt ist. Die entsprechenden Formsegmente öffnen daher später, so daß die erwünschte sequentielle Öffnung der Form erreicht ist.

Ein Vergleich der Figuren 6 und 7 zeigt eine alternative Ausführungsform, die zu dem gleichen Ergebnis führt. Die Hakenelemente 24 verschiedener Formsegmente weisen bei dieser alternativen Ausführungsform einen gleichen Querschnitt auf. Bei den Formsegmenten, die später öffnen sollen, ist der Querschnitt der zugeordneten Nut 20 entsprechend vergrößert, so daß die Anlageflächen 26 ebenfalls entsprechend später an der zugeordneten Nutwandfläche 22 zur Anlage kommen.

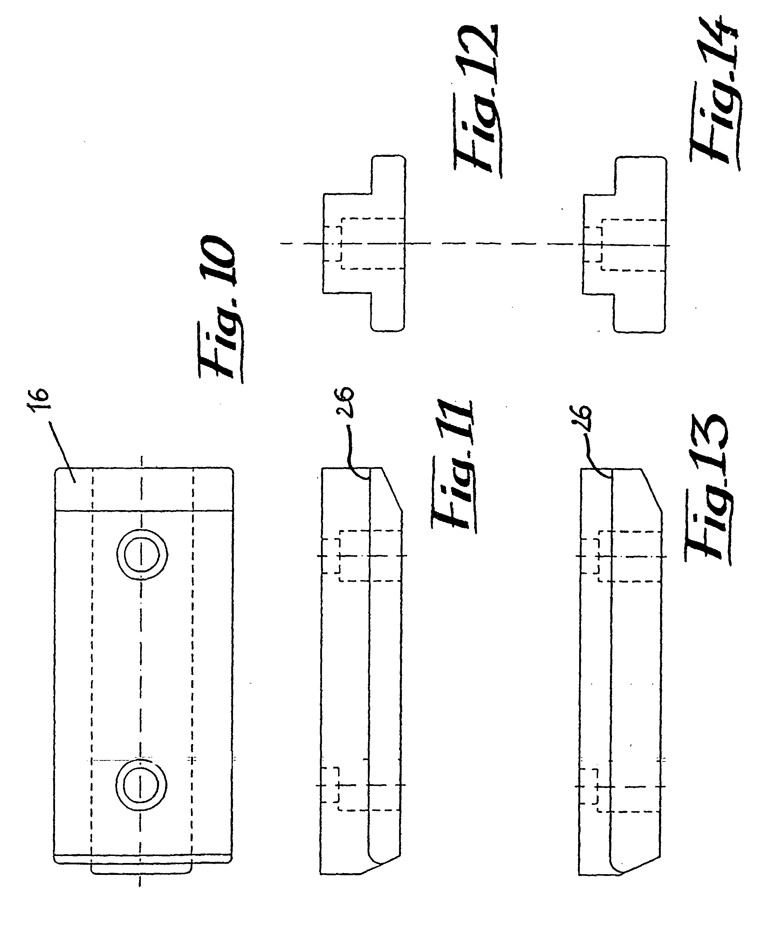

Der Vergleich der Figuren 8 und 9 zeigt eine Ausführungsform analog den Figuren 6 und 7, wobei Einsätze aus Hartmetall 27 die Nutwandflächen 22 bilden.

Wie die Figuren 10 bis 14 zeigen, ist bei der Ausführungsform gemäß den Figuren 4 und 5 der zu betreibende Aufwand äußerst gering, da sich die Hakenelemente 16 ausbauen lassen. Durch Abfräsen der Anlagefläche 26, beispielsweise des in Figur 13 dargestellten Hakenelementes, kann die Dicke des T-förmigen Querschnittes in den entsprechenden Bereichen verringert werden, so daß der Abstand zwischen der Anlagefläche und einer Bezugsfläche leicht vergrößert werden kann, wie ein Vergleich der Figuren 11 und 13 zeigt.

Entsprechende Umbaumaßnahmen sind mit geringem Aufwand zu bewerkstelligen, so daß gattungsgemäße herkömmliche Formen weiter verwendet werden können.

Der zu betreibende Aufwand ist ebenfalls gering, wenn die Nutwandflächen 22 bildende Einsätze 27 austauschbar gestaltet sind. Sie lassen sich ebenfalls entnehmen und ihre Dicke verringern, so daß die Tiefe der zugeordneten Nut 20 entsprechend vergrößert wird.

### Bezugszeichenliste

- 1 bis 9: Numerierung einzelner Formsegmente
- 10: Form
- 12: Mittelachse
- 14: Halter
- 16: Außenring (Haltering)
- 18: konische Gleitfläche
- 20: Nut
- 22: Nutwandfläche
- 24: Hakenelement
- 26: Anlagefläche (von 24)
- 27: Einsatz
- 28: Formsegment

## Patentansprüche

1. Form zum Formen eines im wesentlichen ringförmigen Körpers, mit einer Vielzahl von äußeren, radial verfahrbaren Formsegmenten (14/28), die von einer sie umgebenden, im wesentlichen ringförmigen Struktur in Form eines Außenringes (16) mit einer den Formsegmenten zugewandten Gleitfläche (18) zusammengehalten werden, wobei mit je einem Formsegment (14/28) verbundene Hakenelmente (24) in je eine hinterschnittene, in die Gleitfläche eingelassene Nut (20) eingreifen, so daß bei axialem Verfahren des Ringes (16) eine radiale Bewegung der Formsegmente bewirkt wird, wobei je zumindest eine Anlagefläche (26) an einer Nutwandfläche (22) zur Anlage kommt, **dadurch gekennzeichnet, daß** der Querschnitt einiger Hakenelemente (24) und/oder der Querschnitt der zugeordneten Nuten (20) so bemessen sind, daß die Anlagefläche (26) bei axialem Verfahren des Außenringes (16) später an der jeweiligen zugeordneten Nutwandfläche (22) zur Anlage kommt, als die Anlageflächen anderer Hakenelemente.

2. Form nach Anspruch 1, **dadurch gekennzeichnet, daß** die Gleitfläche (18) konisch ausgebildet ist.

3. Form nach Anspruch 1 oder 2, **dadurch gekennzeichnet, daß** sie eine Vulkanisationsform für Fahrzeugreifen ist.

4. Form nach einem der vorhergehenden Ansprüche, **dadurch gekennzeichnet, daß** die Hakenelemente (24) einen im wesentlichen T-förmigen Querschnitt aufweisen, wobei zwei Anlageflächen (26) im radial inneren Bereich des Querhauptes des T's angeordnet sind.

5. Verfahren zum Umbau einer Form gemäß dem Oberbegriff des Anspruches 1 in eine sequentiell öffnende Form mit allen Merkmalen des Anspruches 1, **dadurch gekennzeichnet, daß** der Querschnitt einiger Hakenelemente (24) in einer zur jeweiligen Anlagefläche (26) senkrechten Richtung verringert wird, und/oder daß der Querschnitt der zugeordneten Nuten (20) in einer zur jeweiligen Anlagefläche (26) senkrechten Fläche entsprechend vergrößert wird.

6. Verfahren nach Anspruch 5, **dadurch gekennzeichnet, daß** die Anlagefläche (26) zumindest einiger Hakenelemente (24) einer spanabhebenden Bearbeitung unterzogen wird.

## Claims

1. Mould for moulding a substantially annular body, said mould having a plurality of outer, radially displaceable mould segments (14/28), which are held together by a substantially annular structure, which surrounds them and is in the form of an outer ring (16) which has a sliding face (18) facing the mould segments, hook-like elements (24), which are each connected to a respective mould segment (14/28), engaging in a respective undercut groove (20), provided in the sliding face, so that a radial movement of the mould segments is effected during the axial displacement of the ring (16), and at least one respective abutment face (26) abutting against a groove wall face (22), **characterised in that** the cross-section of some of the hook-like elements (24) and/or the cross-section of the associated grooves (20) are/is so dimensioned that the abutment face (26) abuts against the respective associated groove wall face (22) during an axial displacement of the outer ring (16) later than the abutment faces of other hook-like elements.

2. Mould according to claim 1, **characterised in that** the sliding face (18) has a conical configuration.

3. Mould according to claim 1 or 2, **characterised in that** it is a vulcanisation mould for vulcanising vehicle tyres.

4. Mould according to one of the preceding claims, **characterised in that** the hook-like elements (24) have a substantially T-shaped cross-section, two abutment faces (26) being disposed in the radially inner region of the crossbar of the "T".

5. Method of redesigning a mould, according to the preamble of claim 1, to form a sequentially opening mould having all of the features of claim 1, **characterised in that** the cross-section of some of the hook-like elements (24) is reduced in a direction perpendicular to the respective abutment face (26), and/or **in that** the cross-section of the associated grooves (20) is enlarged accordingly in a face perpendicular to the respective abutment face (26).

6. Method according to claim 5, **characterised in that** the abutment face (26) of at least some of the hook-like elements (24) is subjected to a metal-cutting process.

## Revendications

1. Moule pour façonner un corps sensiblement annulaire, comprenant une pluralité de segments de moule (14, 28) extérieurs, radialement mobiles, qui sont maintenus ensemble par une structure sensiblement annulaire les entourant, conçue sous la forme d'un anneau extérieur (16) muni d'une surface de glissement (18) orientée vers les segments de moule, des éléments de crochets (24) assemblés chacun à un segment de moule (14, 28) entrant en prise chacun dans une rainure (20) réalisée en contre-dépouille dans la surface de glissement, de telle sorte qu'un déplacement axial de l'anneau (16) entraîne un mouvement radial des segments de moule, au moins une surface de contact (26) étant en appui contre une paroi de rainure (22), **caractérisé en ce que** la section de quelques éléments de crochets (24) et/ou la section des rainures (20) associées sont dimensionnées de telle sorte que la surface de contact (26) pendant le déplacement axial de l'anneau extérieur (16) entre en appui contre la paroi de rainure (22) associée correspondante plus tard que les surfaces de contact d'autres éléments de crochets.

2. Moule selon la revendication 1, **caractérisé en ce que** la surface de glissement (18) est conique.

3. Moule selon la revendication 1 ou 2, **caractérisé en ce qu'**il constitue un moule de vulcanisation pour des pneus de véhicules.

4. Moule selon une des revendications précédentes, **caractérisé en ce que** les éléments de crochets (24) ont une section sensiblement en forme de T, deux surfaces de contact (26) étant disposées dans la zone radialement intérieure de la traverse du T.

5. Procédé destiné à transformer un moule selon le préambule de la revendication 1 en un moule à ouverture séquentielle comprenant toutes les caractéristiques de la revendication 1, **caractérisé en ce que** la section de quelques éléments de crochets (24) diminue dans une direction perpendiculaire à la surface de contact (26) correspondante, et/ou **en ce que** la section des rainures (20) associées s'agrandit de manière correspondante pour former une surface perpendiculaire à la surface de contact (26) correspondante.

6. Procédé selon la revendication 5, **caractérisé en ce que** la surface de contact (26) d'au moins quelques éléments de crochet (24) est soumise à un usinage par enlèvement de copeaux.
